# FASCICULE DE BREVET EUROPEEN

(11) **EP 2 259 366 B1**
(45) Date de publication et mention de la délivrance du brevet: **26.12.2012**
(21) Numéro de dépôt: 10164895.4
(22) Date de dépôt: 03.06.2010
(51) Int. Cl.: H01M 2/10, H01M 2/20, H01M 2/34, A45D 34/00, A45D 40/00

(54) **Dispositif électrique à déclenchement automatique par soulèvement.**
Elektrische Vorrichtung mit automatischer Einschaltung durch Hebung
Electrical device with automatic triggering by lifting.

(30) Priorité: 03.06.2009 FR 0902665
(43) Date de publication de la demande: 08.12.2010
(73) Titulaire: L'Oréal, 75008 Paris (FR)
(72) Inventeur: Sanchez, Marcel, 93600, Aulnay-sous-bois (FR)
(74) Mandataire: Tanty, François

(56) Documents cités:
- EP-A1- 1 155 972
- JP-A- 2007 060 406
- US-A- 2 177 337
- US-A- 5 785 407
- US-A1- 2006 227 537

## Description

La présente invention a pour objet un dispositif électrique, appartenant à un objet manipulable par un utilisateur ou configuré pour être fixé sous un tel objet, lequel est par exemple un dispositif de conditionnement d'un produit cosmétique ou de soin.

Il est connu des demandes US 2006/250795 et US 2006/0274527 de réaliser un socle pour un récipient contenant un liquide, comportant une source lumineuse et un circuit imprimé, la source lumineuse s'allumant lorsque le récipient est soulevé.

La présence du circuit imprimé ajoute à l'encombrement et rend le dispositif plus difficile à recycler, le cas échéant.

EP 1 155 972 décrit un dispositif de conditionnement pour parfum comprenant une base logeant des moyens pour générer un son ou une lumière, activés lorsque le conditionnement est soulevé par suite du retour élastique d'un bouton poussoir.

JP 2007-60406 se rapporte à un boîtier de télécommande comportant un bouton poussoir ménagé sous le boîtier, configuré pour ouvrir le circuit électrique d'alimentation de la télécommande lorsque celle-ci repose sur une surface.

US 5 785 407 décrit un récipient pour boisson sous lequel est fixé un dispositif électrique comportant un circuit imprimé, le dispositif étant configuré pour activer une source lumineuse disposée sur la paroi du récipient lorsque le récipient est rempli de liquide ou lorsqu'il est posé avec une certaine force sur une surface.

Il existe un besoin pour bénéficier d'un dispositif électrique à fixer sous un objet manipulable par un utilisateur ou à intégrer à un tel objet, qui puisse être d'encombrement réduit, simple à fabriquer et de fonctionnement fiable, un tel dispositif étant plus particulièrement mais non exclusivement destiné à provoquer l'allumage d'au moins une source lumineuse quand l'objet est soulevé.

Selon l'un de ses aspects, l'invention a pour objet un dispositif électrique, comportant :
- un support réalisé en une matière électriquement isolante, configuré pour être fixé sous un objet manipulable par un utilisateur ou appartenant à cet objet,
- au moins une pile, logée au moins partiellement dans le support,
- au moins un composant électrique destiné à être alimenté par la pile et,
- des conducteurs électriques reliant la pile au composant électrique,

les conducteurs électriques comportant au moins un conducteur électrique accroché mécaniquement au support, ledit conducteur électrique étant capable de, notamment configuré pour, subir un déplacement relatif par rapport à la pile ou à un autre conducteur, en réponse à une poussée exercée verticalement sur le dispositif, de façon à ce que le composant électrique soit automatiquement électriquement alimenté lorsque l'on soulève l'objet depuis une surface plane horizontale sur laquelle il repose et à ce que l'alimentation électrique du composant cesse automatiquement lorsque l'on repose l'objet sur ladite surface. L'alimentation peut cesser instantanément ou de façon temporisée, en présence d'une temporisation, quand on repose l'objet. L'alimentation peut de même débuter de façon instantanée ou temporisée quand on soulève le dispositif Dans des exemples de réalisation, la pile est mobile relativement au support en réponse à un soulèvement du dispositif. Un déplacement relatif peut avoir lieu entre la pile et le conducteur électrique précité, ce dernier pouvant rester fixe relativement au support.

Dans d'autres exemples de réalisation, la pile reste immobile par rapport au support lorsque le dispositif est soulevé.

Le soulèvement du dispositif peut provoquer une variation de l'écartement entre la pile et ledit conducteur électrique et/ou une variation de l'écartement entre ledit conducteur électrique et un autre conducteur électrique. Un tel agencement de la pile et d'un conducteur électrique ou un tel agencement des conducteurs électriques peut permettre d'obtenir l'alimentation électrique et/ou la cessation automatique de l'alimentation électrique du composant lorsque l'on soulève le dispositif.

La pile peut être montée dans le support, étant notamment reçue dans un logement du support, de manière à être déplacée par rapport à ce support lorsqu'une poussée verticale est appliquée au dispositif lors du soulèvement de ce dernier.

Le déplacement relatif du conducteur électrique peut être une flexion d'une portion de celui-ci, le conducteur pouvant garder un point fixe par rapport au support, notamment un point d'accrochage mécanique au support.

Le support peut être configuré pour être fixé sous l'objet de manière à ce qu'une partie du support demeure immobile relativement à l'objet, que l'objet soit soulevé ou non.

Le support peut être autre qu'un élément formant saillie sur la face inférieure du dispositif lorsque celui-ci est soulevé, notamment autre qu'un bouton poussoir. Lorsque le support est fixé sous un objet, la majeure partie, notamment au moins 50 %, au moins 70 %, au moins 80 % voire 100% de la surface inférieure de l'objet recouvre le support.

Par "conducteur électrique accroché mécaniquement au support", on désigne un conducteur électrique qui n'est pas soudé sur le support ou sur une piste de circuit imprimé solidaire du support, ce conducteur électrique étant par exemple reçu avec friction dans un logement ménagé dans le support, maintenu par bouterollage ou encliquetage sur le support, ou encore immobilisé localement sur le support par un élément rapporté sur le support, cet élément pouvant, le cas échéant, être ledit composant électrique. L'un au moins des conducteurs électriques peut ainsi être retenu sur le support, dans des exemples de réalisation, avec serrage du conducteur entre une borne du composant électrique et une contre-surface du support. L'un au moins des conducteurs peut comporter un trou et le support peut comporter un picot engagé dans ce trou et bouterollé, ce picot étant par exemple réalisé par moulage avec le support.

Le conducteur accroché mécaniquement au support peut subir le déplacement relatif par rapport à la pile ou à un autre conducteur sans être sollicité en déformation, notamment en déformation élastique, étant par exemple rigide.

Le composant électrique est par exemple une source lumineuse, par exemple une LED, ce qui peut permettre d'éclairer l'objet à l'aide du dispositif électrique lorsque l'objet est déplacé, et ainsi renforcer l'attrait de l'objet.

Le composant électrique est par exemple une LED de type CMS. La LED est par exemple de forme parallélépipèdique et comporte deux faces opposées définissant des bornes électriques, lesdites faces étant par exemple métallisées. La LED peut être reçue dans un logement de forme parallélépipédique, et peut appliquer contre le support, avec ses bornes, deux conducteurs électriques rapportés sur le support et à son contact, pour les immobiliser sur le support, au moins partiellement.

Le composant électrique peut être au moins partiellement, sinon totalement, logé dans le support. Le composant électronique peut être disposé dans le support de façon à éclairer le fond de l'objet sous lequel le support est fixé.

L'un au moins des conducteurs électriques, voire tous les conducteurs électriques, est par exemple une lame métallique, d'épaisseur comprise entre 0,1 et 1 mm, et de largeur comprise par exemple entre 1 et 5 mm. Le dispositif peut être dépourvu de fils conducteurs souples gainés, et tous les contacts électriques peuvent s'effectuer sans soudure.

L'un au moins des conducteurs électriques, par exemple celui accroché mécaniquement au support, voire tous les conducteurs électriques, peut être autre qu'un ressort hélicoïdal.

Le conducteur électrique sollicité en déformation élastique peut être autre qu'une couche conductrice recouvrant tout ou partie du support, une telle couche étant par exemple solidaire du support en tout point de ladite couche.

Le dispositif peut être dépourvu de circuit imprimé, tous les conducteurs électriques étant accrochés mécaniquement au support.

La ou les piles peuvent être du type pile bouton, de tension initiale comprise entre 1,5 et 3 V par exemple.

L'un au moins des conducteurs électriques peut comporter une portion élastiquement déformable, ou le support peut comporter une zone élastiquement déformable en contact permanent avec un conducteur électrique, ou le dispositif peut comporter une pièce élastiquement déformable rapportée sur le support et étant en contact permanent avec le conducteur électrique, ladite portion ou zone ou pièce élastiquement déformable étant sollicitée en déformation élastique quand le dispositif repose sur une surface plane horizontale et pouvant exercer par rappel élastique une action tendant à établir et/ou interrompre un courant électrique quand le dispositif est soulevé.

L'un au moins des conducteurs peut comporter une portion élastiquement déformable, sollicitée en déformation élastique quand le dispositif repose sur une surface plane horizontale et pouvant exercer une action tendant à établir un contact électrique quand le dispositif est soulevé.

Le conducteur électrique sollicité en déformation élastique peut être sollicité sans entraîner de déformation du support, le support présentant par exemple une rigidité supérieure à celle dudit conducteur électrique.

L'un au moins des conducteurs électriques, par exemple celui précité, sollicité en déformation élastique, peut être en permanence en contact avec la pile. L'un au moins des conducteurs peut venir en contact ou non avec un autre conducteur électrique, selon que le dispositif est soulevé ou non.

L'un au moins des conducteurs électriques peut contribuer à retenir la pile dans son logement et la mise en place et l'enlèvement de la pile peut nécessiter de détacher ce conducteur électrique du support.

Le support peut être monolithique, étant par exemple réalisé par moulage de matière thermoplastique. En variante, le support peut comporter plusieurs pièces, par exemple des pièces déplaçables les unes par rapport aux autres ou assemblées de façon fixe. Le support peut notamment comporter deux pièces mobiles l'une par rapport à l'autre, par exemple au moins deux pièces au moins partiellement emboîtées l'une dans l'autre. Le conducteur électrique précité, sollicité en déformation élastique, peut s'interposer entre ces deux pièces.

L'objet est par exemple un flacon de parfum ou tout autre conditionnement réalisé avec un fond non opaque, par exemple transparent. La LED précitée peut éclairer le fond de ce conditionnement, lorsque le dispositif est soulevé, par exemple d'une couleur bleue.

Le dispositif électrique peut comporter une base dans laquelle le support est monté, cette base étant destinée à être fixée sous l'objet. En variante, ladite base peut appartenir à l'objet.

Le dispositif peut comporter un film fixé sous le support, recouvrant au moins partiellement la pile et/ou l'un au moins desdits conducteurs. Ce film peut participer au maintien sur le support d'un ou plusieurs conducteurs électriques.

Selon un premier mode de mise en oeuvre de l'invention, le support comporte une partie supérieure et une partie inférieure, déplaçables l'une par rapport à l'autre, la pile étant par exemple reçue dans un logement ménagé dans la partie inférieure du support et le composant électrique étant par exemple reçu dans un logement ménagé dans la partie supérieure du support.

Les conducteurs électriques peuvent comporter, selon ce premier mode de mise en oeuvre, un premier conducteur électrique flexible reliant une première borne du composant électrique et un premier pôle de la pile, ce premier conducteur comportant au moins une portion élastiquement déformable agencée pour exercer une force de rappel élastique entre la partie supérieure et la partie inférieure du support, afin de les amener à se déplacer quand le dispositif est soulevé.

Les conducteurs électriques comportent par exemple :
- un deuxième conducteur électrique accroché mécaniquement sur la partie supérieure du support et comportant une première extrémité reliée à la deuxième borne du composant électrique, et
- un troisième conducteur électrique comportant une première extrémité reliée au deuxième pôle de la pile,
   le deuxième et le troisième conducteurs électriques comportant par exemple chacun une deuxième extrémité et la deuxième extrémité du deuxième conducteur électrique et la deuxième extrémité du troisième conducteur électrique étant sélectivement connectées en fonction de la position relative de la partie supérieure du support par rapport à la partie inférieure du support.

Selon ce premier mode de mise en oeuvre, l'invention peut permettre d'alimenter le composant électrique en fonction d'un déplacement relatif d'au moins une portion de la partie supérieure du support par rapport à la partie inférieure du support, accompagné d'un déplacement relatif d'au moins une portion du deuxième conducteur électrique par rapport à la pile. Ce déplacement relatif est par exemple consécutif à un soulèvement de l'objet sous lequel le dispositif électrique est fixé ou auquel le dispositif appartient, depuis une surface contre laquelle il repose, et ce soulèvement entraîne la disparition d'une force de réaction exercée par ladite surface sur le support en raison du poids de l'objet.

Le deuxième conducteur électrique et le troisième conducteur électrique sont par exemple agencés pour être connectés ensemble lorsque l'objet est tenu en l'air.

Selon un deuxième mode de mise en oeuvre de l'invention, la pile est reçue avec possibilité de déplacement dans un premier logement ménagé dans le support et le composant électrique est reçu dans un deuxième logement ménagé dans le support et distinct du premier logement.

Les conducteurs électriques comportent par exemple :
- un premier conducteur électrique, notamment flexible, comportant une première extrémité fixe reliée à une première borne du composant électrique et une deuxième extrémité libre, agencée pour s'appliquer contre un premier pôle de la pile,
- un deuxième conducteur électrique accroché mécaniquement sur le support et par exemple fixe, ce conducteur comportant une première extrémité reliée à une deuxième borne du composant électrique et une deuxième extrémité.

La première extrémité du premier conducteur électrique s'étend par exemple dans le deuxième logement.

Le deuxième pôle de la pile vient par exemple sélectivement en contact avec la deuxième extrémité du deuxième conducteur électrique, en fonction de la position de la pile dans le premier logement, cette position étant modifiée par le soulèvement du dispositif.

Selon ce deuxième mode de mise en oeuvre, l'alimentation électrique du composant électrique dépend du déplacement de la pile dans le premier logement, ce déplacement correspondant à un déplacement relatif de la pile par rapport au deuxième conducteur électrique. Ce déplacement est par exemple consécutif au soulèvement par un utilisateur de l'objet sous lequel le dispositif électrique est fixé ou auquel le dispositif appartient.

Le dispositif peut comporter un élément intermédiaire présent sous la pile, par exemple une pastille fixée sous la pile, par exemple collée sous celle-ci, et formant saillie sur la face inférieure du dispositif lorsque celui-ci est soulevé.

Lorsque le dispositif est posé sur une surface plane, cette surface plane exerce une force vers le haut sur l'élément intermédiaire, qui peut amener la pile dans une position dans laquelle elle n'est pas alimentée électriquement. Lorsque le dispositif est soulevé, la force exercée sur l'élément intermédiaire disparaît, ce qui conduit au déplacement de la pile dans une position dans laquelle elle permet l'alimentation électrique dudit composant. La pile peut notamment venir en appui contre un conducteur électrique quand le dispositif est soulevé et s'écarter de ce conducteur électrique quand le dispositif est reposé.

Le film précité peut comporter une ouverture pour le passage de l'élément intermédiaire, notamment de la pastille précitée.

Selon un troisième mode de mise en oeuvre de l'invention, le dispositif comporte deux piles, reçues respectivement dans un premier et dans un deuxième logement ménagés dans le support, et le composant électrique est reçu dans un troisième logement ménagé dans le support.

Les conducteurs électriques comportent par exemple :
- deux premiers conducteurs électriques reliant un premier pôle de chaque pile à une borne différente du composant électrique,
- deux deuxièmes conducteurs électriques comprenant une première extrémité reliée au deuxième pôle de chaque pile et une deuxième extrémité, et
- au moins un troisième conducteur électrique accroché mécaniquement, directement ou indirectement, sur le support et déplaçable par rapport aux premiers et deuxièmes conducteurs électriques, selon qu'une force verticale est exercée ou non sur le dispositif, ce troisième conducteur électrique permettant sélectivement de connecter ou non entre elles les deuxièmes extrémités des deuxièmes conducteurs électriques, en fonction du soulèvement ou non du dispositif.

Par « accroché directement », respectivement « accroché indirectement », il faut comprendre accroché sur le support sans, respectivement via, une pièce intermédiaire.

Selon les premier et deuxième modes de mise en oeuvre de l'invention, les conducteurs électriques accrochés mécaniquement sur le support sont par exemple directement accrochés sur le support.

Le support peut comporter au moins une zone déformable en réponse au soulèvement du dispositif et le troisième conducteur électrique est par exemple accroché mécaniquement sur la zone déformable du support. Cette zone déformable est par exemple une zone amincie du support et/ou est réalisée dans une matière élastomère.

En variante du troisième mode de mise en oeuvre, le dispositif comporte au moins une pièce élastiquement déformable, se déformant en réponse au soulèvement du dispositif, cette pièce étant rapportée sur le support et le troisième conducteur électrique est par exemple accroché mécaniquement sur ladite pièce.

La zone déformable du support ou en variante la pièce élastiquement déformable rapportée sur le support peut être en contact permanent avec le troisième conducteur électrique, étant sollicitée en déformation élastique quand le dispositif repose sur une surface plane horizontale et pouvant exercer par rappel élastique une action tendant à établir un courant électrique quand le dispositif est soulevé.

Selon ce troisième mode de mise en oeuvre, le composant électrique est alimenté en fonction d'un déplacement d'une portion au moins du troisième conducteur électrique par rapport au support et par rapport aux deux piles, consécutif au soulèvement par un utilisateur de l'objet sous lequel le dispositif électrique est fixé ou auquel le dispositif appartient.

Le troisième conducteur est par exemple un disque ou une rondelle métallique, portée par un pion formant saillie sous la face inférieure du dispositif quand celui-ci est soulevé.

L'invention a encore pour objet, selon un autre de ses aspects, un dispositif de conditionnement d'un produit cosmétique, comportant :
- un récipient contenant le produit, ce récipient comportant une paroi de fond et,
- un dispositif électrique tel que défini ci-dessus, solidaire de la paroi de fond du récipient.

Le composant électrique est par exemple une source lumineuse agencée pour éclairer le fond du récipient, par exemple avec une lumière de couleur bleue.

L'invention a encore pour objet, selon un autre de ses aspects, un dispositif électrique comportant :
- un support,
- une pile mobile dans un logement du support,
- un conducteur électrique capable d'être contacté électriquement, notamment configuré pour être contacté électriquement, par la pile quand le dispositif est soulevé,
- un composant électrique destiné à être alimenté électriquement par la pile, et
- un élément intermédiaire formant saillie sur la face inférieure du support lorsque le dispositif est soulevé,
   la pile étant entraînée en déplacement par l'élément intermédiaire lorsque le dispositif repose sur une surface plane horizontale par sa face inférieure et la pile s'écartant dudit conducteur électrique, de façon à n'alimenter le composant électrique que quand le dispositif est soulevé.

L'élément intermédiaire est par exemple une pastille collée sous la pile ou une patte s'étendant sous la pile, solidaire du support et portant un relief.

Un film peut être fixé sur le support, par exemple pour retenir la pile dans son logement. Ce film peut être traversé d'un trou pour le passage de l'élément intermédiaire.

L'invention pourra être mieux comprise à la lecture de la description qui va suivre, d'exemples non limitatifs de mise en oeuvre de celle-ci, et à l'examen du dessin annexé, sur lequel :
- la figure 1 est une vue éclatée d'un dispositif électrique selon un premier mode de mise en oeuvre de l'invention,
- la figure 2 est une vue en coupe du dispositif représenté à la figure 1,
- la figure 3 représente un détail de la figure 2,
- la figure 4 est une vue éclatée d'un dispositif électrique selon un deuxième mode de mise en oeuvre de l'invention,
- la figure 5 représente le dispositif électrique de la figure 4 lorsqu'il est assemblé,
- la figure 6 est une vue en coupe du dispositif représenté à la figure 5,
- la figure 7 est une vue éclatée d'un autre dispositif selon un deuxième mode de mise en oeuvre de l'invention,
- les figures 8 et 9 représentent différents exemples de bases recevant des dispositifs,
- les figures 10, 11, 13, 15, 16 et 17 représentent des variantes du dispositif électrique de la figure 7 et les figures 12 et 14 sont des vues en coupe respectives des dispositifs des figures 11 et 13,
- la figure 18 est une vue éclatée d'un dispositif selon un troisième mode de mise en oeuvre de l'invention,
- la figure 19 est une vue de dessus du dispositif de la figure 18, lorsque celui-ci est assemblé,
- la figure 20 est une variante du dispositif de la figure 18,
- la figure 21 est une vue en coupe du dispositif de la figure 18 lorsque ce dernier est assemblé et,
- la figure 22 représente de façon schématique un exemple de dispositif de conditionnement comportant un exemple de dispositif électrique selon l'invention.

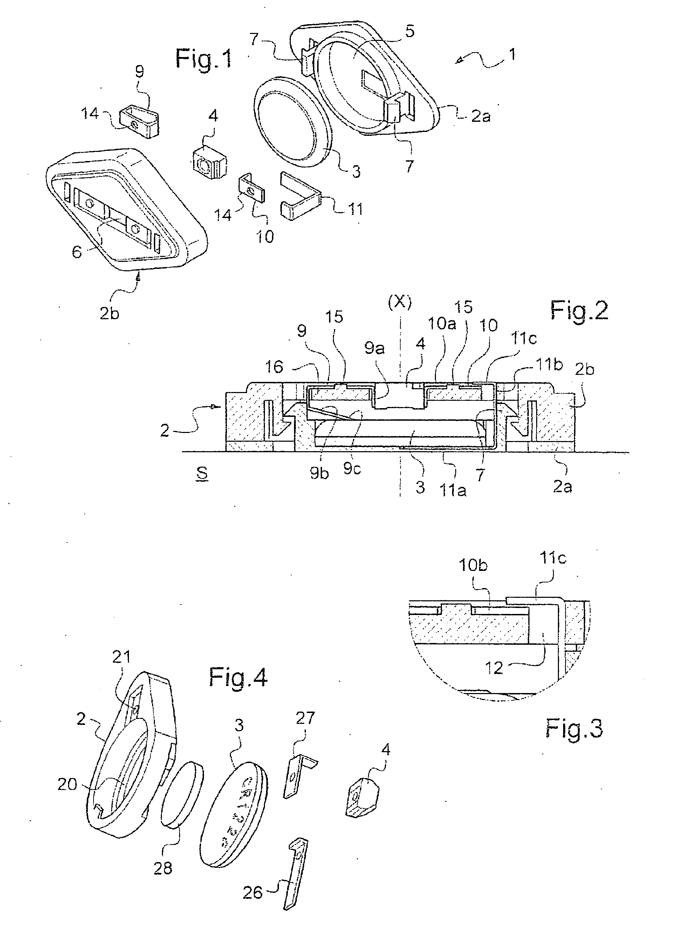

On a représenté aux figures 1 et 2 un dispositif électrique 1 selon un premier mode de mise en oeuvre de l'invention.

Le dispositif 1 comporte un support 2 qui peut comporter, comme illustré, une partie supérieure 2b et d'une partie inférieure 2a déplaçables l'une par rapport à l'autre, par exemple en translation selon un axe X qui est par exemple orienté verticalement. Chacune des parties 2a et 2b a par exemple une forme générale aplatie perpendiculairement à l'axe X.

Lors de l'utilisation, la partie supérieure 2b est solidaire d'un objet, étant par exemple fixée sur une paroi de fond dudit objet, lequel peut-être un récipient contenant un produit cosmétique ou de soin.

Les parties 2a et 2b du support sont par exemple réalisées en une matière électriquement isolante, par exemple une matière thermoplastique, par exemple une polyoléfine ou silicone, céramique, carton, papier ou bois.

Le dispositif 1 peut comporter une pile 3 et un composant électrique 4, qui est dans l'exemple décrit une source lumineuse, par exemple une diode électroluminescente, de type CMS.

La pile 3 peut être une pile bouton, par exemple de type CR 12-20 éventuellement rechargeable.

La pile 3 peut-être reçue, comme illustré, dans un logement 5 de la partie inférieure 2a du support 2 et la source lumineuse 4 peut-être reçue dans un logement traversant 6, ménagé dans une paroi supérieure de la partie supérieure 2b.

Les deux parties 2a et 2b sont limitées dans leur déplacement en écartement l'une de l'autre, par exemple grâce à un encliquetage des deux parties l'une dans l'autre.

Comme on peut le voir sur la figure 2, la partie inférieure 2a du support peut comporter des moyens d'accrochage 7, par exemple des pattes munies de dents, par exemple disposés de part et d'autre du logement 5, et la partie supérieure 2b comporte des moyens d'accrochage 8 correspondants, qui sont par exemple des pattes munies de dents, agencés pour coopérer avec les moyens d'accrochage 7.

Le dispositif électrique 1 représenté aux figures 1 et 2 comporte trois conducteurs électriques 9, 10, 11 accrochés mécaniquement sur le support 2.

Les premier et deuxième conducteurs 9 et 10 sont par exemple retenus sur la partie supérieure 2b du support et le troisième conducteur 11 peut être maintenu contre la partie inférieure 2a du support par la pile 3 lorsqu'elle est placée dans le logement 5, comme on peut le voir sur la figure 2.

Comme représenté sur cette figure, le composant électrique 4 peut être relié à sa première borne à une première extrémité 9a du premier conducteur 9 et à sa deuxième borne à une première extrémité 10a du deuxième conducteur 10.

Le premier conducteur 9 est, dans l'exemple décrit, un conducteur flexible dont une portion 9b s'étend entre la partie supérieure 2b et la partie inférieure 2a du support, par exemple obliquement, comme illustré.

Ce premier conducteur 9 comporte une deuxième extrémité 9c reliée à un premier pôle de la pile 3.

Le deuxième conducteur 10 comporte une deuxième extrémité 10b, qui peut déboucher sur un passage traversant 12, ménagé dans la paroi de la partie supérieure 2b.

Les premier et deuxième conducteurs 9 et 10 peuvent comporter des trous 14 dans lesquels sont engagés des picots 15 réalisés par moulage avec la paroi supérieure 16 de la partie supérieure 2b. Les trous 14 contribuent à immobiliser les conducteurs 9 et 10 conjointement avec le composant électrique 4. Les picots 15 sont bouterollés.

Les extrémités des premier et deuxième conducteurs 9 et 10 venant au contact du composant électrique 4 sont formées, dans l'exemple illustré, par des retours vers le bas.

Le troisième conducteur 11 peut présenter comme dans l'exemple illustré une forme doublement coudée. Il comporte une première extrémité 11a en contact avec le deuxième pôle de la pile 3 et une portion médiane 11b s'étendant entre la partie inférieure 2a et la partie supérieure 2b du support 2, cette portion médiane 11b traversant le passage 12. Il comporte également une deuxième extrémité 11c formée par un retour vers l'intérieur.

Dans l'exemple de la figure 2, le dispositif électrique 1 est représenté lorsqu'une force est exercée sur ce dernier selon l'axe X, ce qui correspond au cas où l'objet, sous lequel le dispositif électrique 1 est fixé ou auquel le dispositif électrique 1 appartient, a été posé sur une surface plane S.

Le circuit électrique est ouvert, en raison du jeu existant entre les extrémités 10b et 11c, comme on peut le voir à la figure 3.

Lorsque le dispositif est soulevé, les parties supérieure 2b et inférieure 2a s'écartent, aidées en cela par l'action de rappel de la portion flexible 9b, et les conducteurs 10 et 11 entrent en contact au niveau de leurs extrémités. Cela permet l'allumage de la LED.

On va maintenant décrire en référence aux figures 4 à 17 des dispositifs électriques selon un deuxième mode de mise en oeuvre de l'invention.

Le support 2 est par exemple monolithique, contrairement à ce qui a été décrit en référence aux figures 1 à 3, et peut comporter un premier logement 20 destiné à recevoir la pile 3 et un deuxième logement 21 destiné à recevoir le composant électrique 4, qui est par exemple une source lumineuse, par exemple une LED de type CMS comme dans l'exemple des figures 1 à 3.

Le premier logement 20 est par exemple ouvert à ses deux extrémités axiales 22 et 24. Le support 2 comporte dans l'exemple des figures 4 à 6 des dents 23 à son extrémité supérieure 22, pour maintenir la pile 3 dans le logement 20.

Le dispositif électrique 1 comporte des conducteurs électriques accrochés mécaniquement sur le support 2, ces conducteurs comprenant un premier conducteur 26 et un deuxième conducteur 27.

Le premier conducteur 26 peut comporter une portion flexible et comporter une première extrémité fixe 26a reliée à une première borne du composant électrique 4 et reçue dans le deuxième logement 21 et une deuxième extrémité libre 26b, agencée pour s'appliquer contre un premier pôle de la pile, de façon à la solliciter en déplacement vers le bas.

Le deuxième conducteur électrique 27 est par exemple de forme coudée, comprenant une première extrémité 27a reliée à une deuxième borne du composant électrique 4 et reçue dans le deuxième logement 21, et une deuxième extrémité 27b débouchant sur l'extrémité inférieure 24 du premier logement 20.

Le premier conducteur 26 et le deuxième conducteur 27 sont par exemple retenus sur le support grâce à des trous 14 dans lesquels sont reçus des picots 15 du support, maintenus au moyen de retours 26c et 27c en appui contre des contre-surfaces correspondantes du support par le composant électrique 4.

Le dispositif 1 peut encore comporter un élément intermédiaire formant saillie sur la face inférieure du support lorsque le dispositif est soulevé. Dans l'exemple des figures 4 à 7, 11 à 15 et 17, cet élément intermédiaire est une pastille 28 collée sur la face inférieure de la pile 3, par exemple réalisée en un matériau alvéolaire ou élastomère.

La pastille 28 peut contribuer à éviter à l'objet de glisser sur la surface sur laquelle il est posé.

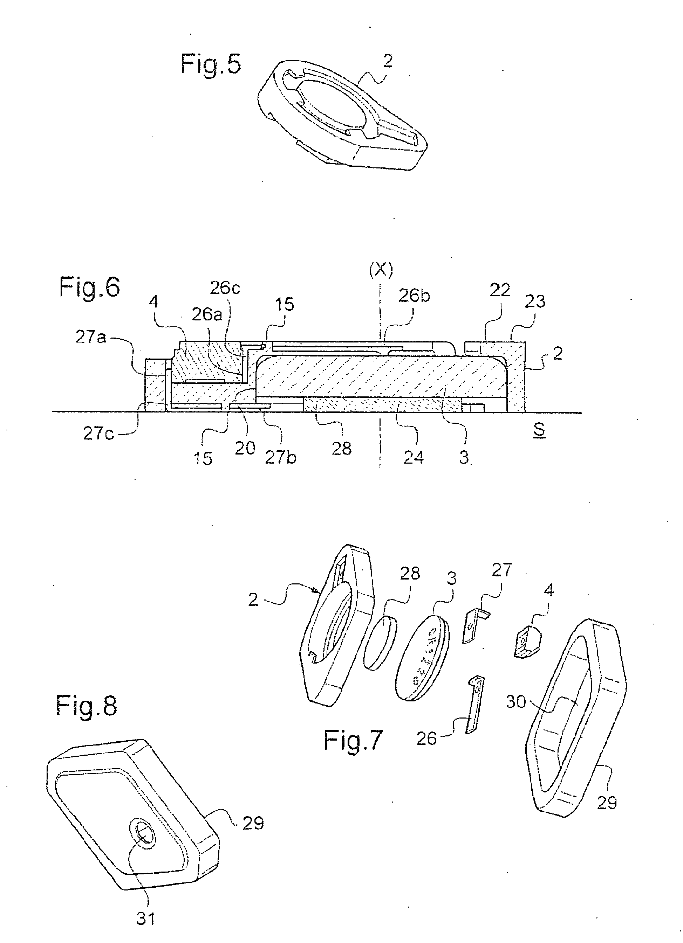

Au repos, comme illustré à la figure 6, la face inférieure de la pastille 28 prend appui sur la surface plane horizontale S sur laquelle repose le dispositif, cette surface S exerçant sur la pastille 28 une force vers le haut amenant cette dernière sensiblement au niveau de l'extrémité inférieure 24 du premier logement 20, ce qui maintient la face inférieure de la pile 3 écartée de l'extrémité 27b, et le circuit électrique demeure ouvert.

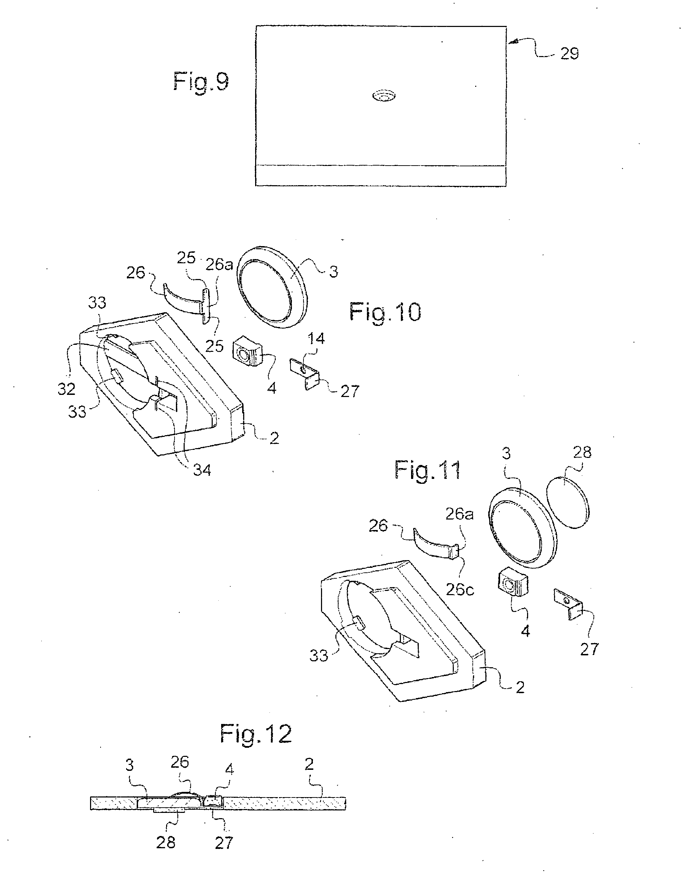

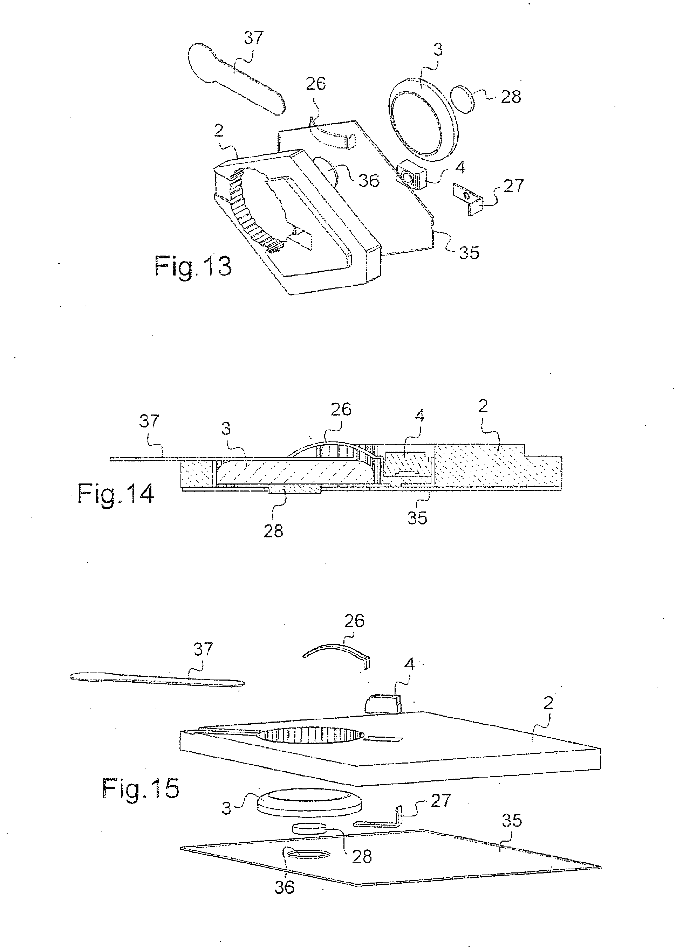

Lors du déplacement du dispositif électrique 1, lorsqu'il est soulevé par l'utilisateur, la pile 3 peut se déplacer dans le logement 20 sous l'effet de rappel élastique de la portion flexible 26b, et, lors de son déplacement, venir au contact de la deuxième extrémité 27b, ce qui ferme le circuit électrique entre cette pile 3 et le composant électrique 4, tandis que la pastille 28 forme saillie sur la surface inférieure du support 2, comme représenté sur les figures 12 et 14.

Comme illustré à la figure 7, le dispositif électrique 1 peut comporter une base 29 comprenant un logement 30 agencé pour recevoir le support 2.

La base 29 est par exemple fixée par collage, par soudure, notamment par ultrasons, ou par encastrement sous l'objet, et le support 2 est fixé dans le logement 30, par exemple par collage ou encastrement.

La base 29 comporte par exemple, comme illustré à la figure 8, une ouverture 31 destinée à être superposée au composant électrique 4 lorsque ce dernier est positionné dans le logement 30. Ainsi, lorsque le composant électrique 4 est une source lumineuse, la lumière émise par ce dernier peut se propager à travers l'ouverture 31. En variante, la base 29 est réalisée dans une matière transparente.

La base 29 peut être de forme quelconque, en fonction par exemple de la forme de la paroi de fond du dispositif de conditionnement sous lequel le dispositif électrique 1 est fixé.

Dans l'exemple de la figure 7, la base 29 a une forme de losange et dans l'exemple de la figure 9, la base 29 a une forme rectangulaire mais pourrait encore être circulaire, elliptique, annulaire ou polygonale.

La base 29 peut encore être réalisée de façon monolithique avec l'objet destiné à être éclairé par la source lumineuse portée par le support 2.

Dans les exemples représentés aux figures 10 à 17, le premier conducteur 26 a une forme arquée.

Dans l'exemple de la figure 10, la paroi inférieure du support 2 est largement ajourée au niveau du premier logement 20, le fond de ce dernier comportant un pont de matière 32 et deux dents 33. Le pont de matière 32 agit comme un élément intermédiaire, comportant un relief non représenté permettant de soulever la pile 3 dans le premier logement 20 lorsque le dispositif repose sur une surface plane horizontale.

Le premier conducteur 26 comporte à sa première extrémité 26a deux ailes 25 destinées à coopérer mécaniquement avec des fentes 34 du deuxième logement 21 pour réaliser l'accrochage mécanique du premier conducteur 26 sur le support 2. Similairement à ce qui a été décrit en référence aux figures 4 à 6, le deuxième conducteur 27 est accroché sur le support 2 par serrage entre une contre-surface du support et une borne du composant électrique 4 et engagement d'un picot 15 dans un trou 14, puis bouterollage du picot.

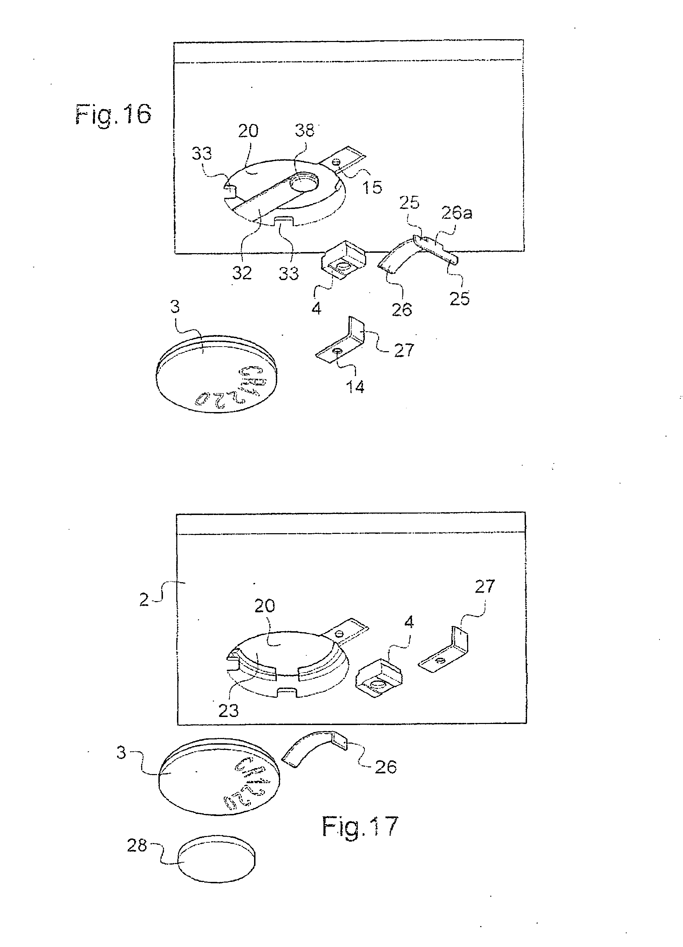

Dans l'exemple de la figure 16, le pont de matière 32 est remplacé par une patte portant un relief 38 qui agit comme un élément intermédiaire faisant saillie sur la face inférieure du dispositif lorsque ce dernier est soulevé et permettant de soulever la pile dans le premier logement quand le dispositif repose sur une surface plane horizontale.

Dans l'exemple de la figure 11, le premier conducteur 26 comporte au niveau de sa première extrémité 26a une partie droite 26c destinée à être maintenue contre le support 2 par friction contre le composant électrique 4 lorsque ce dernier et le premier conducteur 26 sont tous deux disposés dans le deuxième logement 21. La paroi de fond du premier logement 20 comporte dans l'exemple illustré des dents 33 de retenue de la pile.

Dans les exemples des figures 13 à 15, le dispositif électrique 1 comporte un film de maintien 35, comportant par exemple une première face recouverte d'un adhésif et destinée à la fixation au support 2 et une deuxième face sur laquelle des informations, par exemple des références commerciales ou une liste d'ingrédients, peuvent être imprimés, et par laquelle le dispositif peut reposer.

Le film de maintien 35 peut comporter une ouverture 36 pour le passage de la pastille 28 collée sous la pile 3. Cette ouverture 36 peut présenter un diamètre inférieur à celui du premier logement 20, de façon à permettre au film 35 de retenir la pile 3 sur le support.

Comme illustré sur les figures 13 à 15, le dispositif 1 peut comporter une languette 37 en matériau isolant, qui est par exemple intercalée entre la pile 3 et le premier conducteur 26 avant la première utilisation et retirée par l'utilisateur lors de la première utilisation.

Dans l'exemple représenté à la figure 17, les dents 23 de la paroi supérieure 22 s'étendent en arc de cercle dans le premier logement 20.

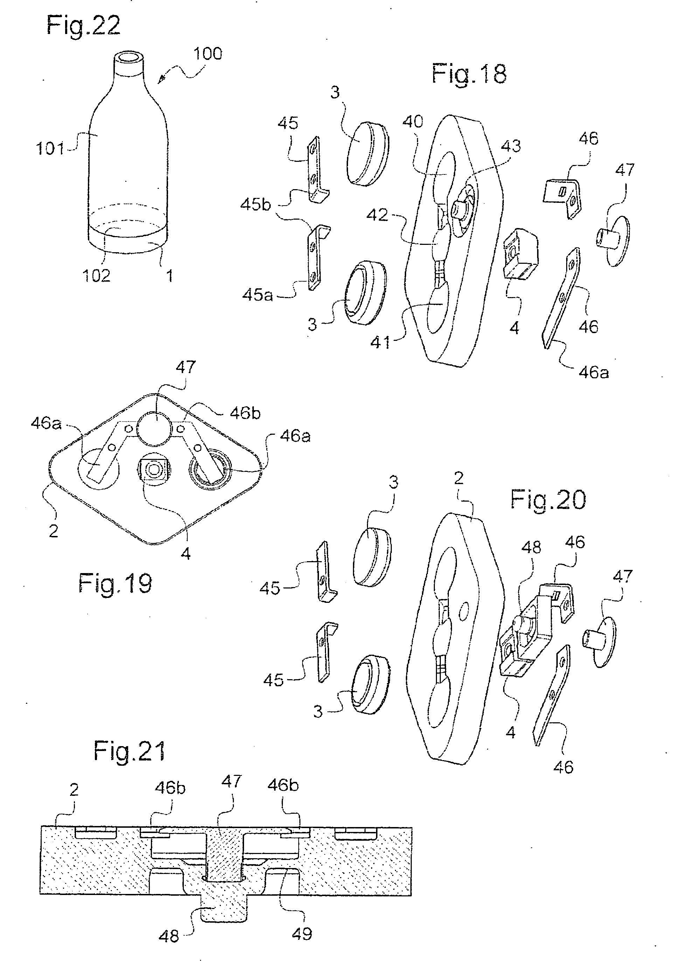

On va maintenant décrire, en référence aux figures 18 à 21, des dispositifs électriques 1 selon un troisième mode de mise en oeuvre de l'invention, dans lequel le support 2 comporte un premier logement 40 et un deuxième logement 41 pour recevoir chacun une pile 3, et un troisième logement 42 pour recevoir le composant électrique 4.

Les deux piles 3 sont disposées dans les logements 40 et 41 avec des polarités inversées l'une par rapport à l'autre.

Le dispositif électrique 1 comporte des conducteurs électriques retenus mécaniquement sur le support 2.

Ces conducteurs comprennent, dans l'exemple considéré, deux premiers conducteurs 45 comprenant des premières extrémités 45a reliées chacune à un pôle respectif d'une pile 3 et des deuxièmes extrémités 45b reliées chacune à une borne respective du composant électrique 4. Les extrémités 45b peuvent être formées par des retours serrés entre le composant électrique 4 et une contre-surface du support et les conducteurs 45 peuvent comporter des trous dans lesquels sont engagés des picots du support.

Le dispositif électrique 1 comporte encore deux deuxièmes conducteurs 46, par exemple de forme coudée dans un même plan parallèle au plan des lames, comprenant une première extrémité 46a reliée à l'autre pôle de la pile correspondante 3 et possédant une deuxième extrémité 46b.

Les conducteurs 46 comportent par exemple, comme illustré sur la figure 19, deux trous dans lesquels sont engagés des picots du support, aux fins de fixation des conducteurs sur le support. Les picots sont bouterollés par exemple.

Le dispositif électrique 1 comporte encore un troisième conducteur 47 qui est reçu dans un logement 43.

Dans l'exemple des figures 18 et 21, le support 2 est réalisé en matière élastomère et comporte une portion déformable 48 définie par au moins une zone amincie 49 du support 2 et sur laquelle le troisième conducteur 47 est accroché mécaniquement.

Lorsque le dispositif 1 est soulevé, la portion élastiquement déformable 48 sollicite élastiquement le conducteur 47 en appui contre les conducteurs 46, comme on peut le voir sur la figure 21, ce qui ferme le circuit électrique. Lorsque le dispositif 1 repose contre une surface plane horizontale, la portion déformable 48 est repoussée vers le haut, et soulève le conducteur 47 hors de contact avec les conducteurs 46.

Dans l'exemple représenté à la figure 20, le support 2 est réalisé en matière plastique non élastomère et une pièce élastiquement déformable 48 réalisée en élastomère est rapportée sur le support 2, le troisième conducteur 47 étant accroché mécaniquement à cette pièce 48.

On a représenté à la figure 22 un exemple de dispositif de conditionnement 100 d'un produit cosmétique ou de soin. Ce dispositif 100 peut comporter un récipient 101 contenant le produit, muni d'une paroi de fond 102.

Un dispositif électrique 1 tel que décrit précédemment est fixé, par exemple par collage, par soudure ou par encastrement sur cette paroi de fond 102.

L'invention n'est pas limitée aux exemples qui viennent d'être décrits. L'invention n'est pas limitée à un nombre particulier de piles 3.

Dans une variante non représentée, la pile 3 est remplacée par une batterie rechargeable et l'objet sous lequel le dispositif électrique 1 est fixé ou auquel il appartient comporte un socle permettant la charge de la batterie lorsque l'objet est posé sur le socle. Lorsque l'on saisit l'objet, le chargement de la batterie s'arrête et le composant électrique est alimenté.

Le composant électrique 4 peut être autre qu'une source lumineuse, étant par exemple une source vibrante, par exemple un moteur disque entraînant en rotation une masselotte excentrée, un dispositif piézoélectrique, un organe électrique chauffant, ou un circuit électronique destiné à diffuser un message sonore.

L'expression « comportant un » doit être comprise comme signifiant « comportant au moins un ».

## Revendications

1. Dispositif de conditionnement (100) d'un produit cosmétique ou de soin, comportant :
un récipient (101) contenant le produit, ce récipient comportant une paroi (102) de fond et,
- un dispositif électrique (1) fixé sur la paroi de fond (102) du récipient, ledit dispositif comportant un support (2; 2a, 2b) réalisé en une matière électriquement isolante, au moins une pile (3), logée au moins partiellement dans le support (2, 2a; 2b), au moins un composant électrique (4) et des conducteurs électriques (9, 10, 11; 26, 27; 45, 46, 47) reliant la pile (3) au composant électrique (4), les conducteurs électriques (9, 10, 11; 26, 27; 45, 46, 47) comportant au moins un conducteur électrique (10 ; 27 ; 47), ledit conducteur électrique étant configuré pour subir un déplacement relatif par rapport à la pile ou à un autre conducteur, en réponse à une poussée exercée verticalement sur le dispositif, de façon à ce que le composant électrique (4) soit automatiquement électriquement alimenté lorsque l'on soulève le dispositif de conditionnement (100) depuis une surfacé contre laquelle il repose et à ce que l'alimentation électrique du composant (4) cesse automatiquement lorsque l'on repose le dispositif de conditionnement (100) sur ladite surface, dispositif **caractérisé par le fait que** ledit conducteur électrique est accroché mécaniquement au support.

2. Dispositif selon la revendication 1, le composant électrique (4) étant une source lumineuse.

3. Dispositif selon l'une des revendications précédentes, étant dépourvu de circuit imprime.

4. Dispositif selon l'une quelconque des revendications précédentes, l'un au moins des conducteurs électriques étant retenu sur le support avec serrage du conducteur entre une borne du composant électrique et une contre-surface du support.

5. Dispositif selon l'une quelconque des revendications précédentes, l'un au moins des conducteurs électriques comportant un trou et le support comportant un picot engagé dans un trou, bouterollé dans celui-ci.

6. Dispositif selon l'une quelconque des revendications précédentes, le composant électrique étant une LED type CMS.

7. Dispositifs selon l'une quelconque des revendications précédentes, l'un au moins des conducteurs électriques étant une lame métallique.

8. Dispositif selon l'une quelconque des revendications précédentes, la ou les piles (3) étant du type pile bouton.

9. Dispositif selon l'une quelconque des revendications précédentes,
- l'un au moins des conducteurs électriques (9 ; 26) comportant une portion élastiquement déformable ou
- le support comportant une zone (48) élastiquement déformable en contact permanent avec un conducteur électrique (47) ou
- le dispositif comportant une pièce (48) élastiquement déformable rapportée sur le support en contact permanent avec le conducteur électrique (47),
ladite portion ou zone ou pièce élastiquement déformable étant sollicitée en déformation élastique quand le dispositif repose sur une surface plane horizontale et exercant par rappel élastique une action tendant à établir et/ou à interrompre un courant électrique quand le dispositif est soulevé.

10. Dispositif selon la revendication précédente, ladite portion élastiquement déformable étant en permanence au contact de la pile (3).

11. Dispositif selon l'une quelconque des revendications précédentes, l'un au moins des conducteurs électriques (11 ; 46) étant en permanence en contact avec la pile (3) et venant en contact ou non avec un autre conducteur électrique (10 ; 47), selon que le dispositif est soulevé ou non.

12. Dispositif selon l'une quelconque des revendications 1 à 10, l'un au moins des conducteurs (26) contribuant à retenir la pile (3) dans son logement (20) et la mise en place et l'enlèvement de la pile (3) nécessitant de détacher le conducteur électrique (26) du support (2).

13. Dispositif selon l'une quelconque des revendications précédentes, le support (2) étant monolithique ou le support comportant plusieurs pièces (2a, 2b).

14. Dispositif selon la revendication 1, la pile étant mobile relativement au support en réponse à un soulèvement du dispositif.

15. Dispositif selon la revendication 1, le conducteur électrique n'étant pas soudé sur le support au sur une piste de circuit imprimé solidaire du support.

## Claims

1. A packaging device (100) for a cosmetic or care-product composition, said packaging comprising:
• a container (101) containing the composition, the container including a bottom wall (102); and
• an electrical device (1), fastened to the bottom wall (102) of the container, said device comprising a support (2; 2a, 2b) made out of an electrically-insulating material, at least one battery (3), that is housed in the support (2, 2a; 2b) at least in part; at least one electrical component (4) and electrical conductors (9, 10, 11; 26, 27; 45, 46, 47) that connect the battery (3) to the electrical component (4), the electrical conductors (9, 10, 11; 26, 27; 45, 46, 47) including at least one electrical conductor (10; 27; 47),
said electrical conductor being configured to be subjected to movement relative to the battery or to another conductor, in response to thrust exerted vertically on the device, in such a manner that the electrical component (4) is automatically powered electrically when the packaging device (100) is picked up off a surface on which it was standing and that the component (4) automatically ceases to be powered electrically when the packaging device (100) is put back on said surface,
the device being **characterized by** the fact that said electrical conductor is fastened mechanically to the support.

2. A device according to claim 1, the electrical component (4) being a light source.

3. A device according to any preceding claim, said device not having a printed circuit.

4. A device according to any preceding claim, at least one of the electrical conductors being retained on the support by clamping the conductor between a terminal of the electrical component and a backing surface of the support.

5. A device according to any preceding claim, at least one of the electrical conductors including a hole, and the support including a pin that is received in the hole, with its tip being plastically flattened against the conductor.

6. A device according to any preceding claim, the electrical component being an LED of the SMD type.

7. A device according to any preceding claim, at least one of the electrical conductors being a metal blade.

8. A device according to any preceding claim, the battery (ies) (3) being of the button-battery type,

9. A device according to any preceding claim,
at least one of the electrical conductors (9; 26) including an elastically-deformable portion; or
the support including an elastically-deformable zone (48) that is in permanent contact with an electrical conductor (47) ; or
• the device including an elastically-deformable part (48) that is fitted on the support and that is in permanent contact with the electrical conductor (47),
said elastically-deformable portion or zone or part being urged to deform elastically when the device is standing on a horizontal plane surface and exerting an elastic return action that tends to establish and/or interrupt an electrical contact when the device is pickled up.

10. A device according to any preceding claim, said elastically-deformable portion being in permanent contact with the battery (3).

11. A device according to any preceding claim, at least one of the electrical conductors (11; 46) being in permanent contact with the battery (3) and optionally coming into contact with another electrical conductor (10; 47), depending on whether or not the device is picked up.

12. A device according to any one of claims 1 to 10, at least one of the conductors (26) contributing to retaining the battery (3) in its housing (20), which electrical conductor (26) needs to be detached from the support (2) in order to put the battery (3) into place or to remove it.

13. A device according to any preceding claim, the support (2) being a one-piece part, or the support comprising a plurality of parts (2a, 2b).

14. A device according to claim 1, the battery being movable relative to the support in response to the device being picked up.

15. A device according to claim 1, the electrical conductor not being bonded on the support or on a printed-circuit track secured to the support.

## Patentansprüche

1. Vorrichtung zur Aufbereitung (100) eines kosmetischen Produktes oder eines Pflegeproduktes, die aufweist:
- einen Behälter (101), der das Produkt enthält, wobei dieser Behälter eine Bodenwandung (102) aufweist, und,
- eine elektrische Einrichtung (1), die auf der Bodenwandung (102) des Behälters festgelegt ist, wobei die besagte Einrichtung aufweist, einen Träger (2; 2a, 2b), der aus einem elektrisch isolierenden Material verwirklicht ist, zumindest eine Batterie (3), die zumindest teilweise auf dem Träger (2, 2a; 2b) untergebracht ist, zumindest ein elektrisches Bauteil (4) und elektrische Leiter (9, 10, 11; 26, 27; 45, 46, 47), die die Batterie (3) an das elektrische Bauteil (4) anbinden, wobei die elektrischen Leiter (9, 10, 11; 26, 27; 45, 46, 47) zumindest einen elektrischen Leiter (10; 27; 47) aufweisen, wobei dieser elektrische Leiter ausgebildet ist, um eine relative Versetzung relativ zu der Batterie oder einem andere Leiter hinzunehmen, in Reaktion auf einen Stoß, der senkrecht auf die Vorrichtung ausgeübt wird, in der Weise, dass das elektrische Bauteil (4) automatisch elektrisch versorgt wird, wenn man die Vorrichtung zur Aufbereitung (100) von einer Fläche aufhebt, an der sie ruht, und so dass die elektrische Versorgung des Bauteils (4) automatisch aufhört, wenn man die Vorrichtung zur Aufbereitung (100) auf die besagte Fläche zurücksetzt, wobei die Vorrichtung **dadurch gekennzeichnet ist, dass** der elektrische Leiter mechanisch an den Träger gekoppelt ist.

2. Vorrichtung nach Anspruch 1, wobei das elektrische Bauteil (4) eine Lichtquelle ist.

3. Vorrichtung nach einem der voranstehenden Ansprüche, die ohne eine gedruckte Schaltung ist.

4. Vorrichtung nach irgendeinem der voranstehenden Ansprüche, wobei der zumindest eine der elektrischen Leiter mit einer Pressung bzw. Klemmung des Leiters auf dem Träger zwischen einem Anschluss des elektrischen Bauteils und einem Widerlager bzw. einer Gegenfläche des Trägers zurückgehalten wird.

5. Vorrichtung nach irgendeinem der voranstehenden Ansprüche, wobei der zumindest eine der elektrischen Leiter ein Loch aufweist und der Träger einen Stachel bzw. Rastzahn aufweist, der in ein Loch eingreift, mit dem dieser vernietet ist.

6. Vorrichtung nach einem der voranstehenden Ansprüche, wobei das elektrische Bauteil eine LED von dem Typ CMS ist.

7. Vorrichtung nach einem der voranstehenden Ansprüche, wobei der zumindest eine der elektrischen Leiter eine Zunge aus Metall ist.

8. Vorrichtung nach irgendeinem der voranstehenden Ansprüche, wobei die Batterie oder die Batterien (3) von dem Typ der Knopfbatterie sind.

9. Vorrichtung nach einem der voranstehenden Ansprüche, wobei
- der zumindest eine der elektrischen Leiter (9; 26) einen elastisch deformierbaren Anteil aufweist, oder
- der Träger einen Bereich (48) aufweist, der im dauerhaften Kontakt mit einem elektrischen Leiter (47) elastische deformierbar ist, oder
- die Vorrichtung ein elastisch deformierbares Stück (48) aufweist, das auf dem Träger im dauerhaften Kontakt mit dem elektrischen Leiter (47) angestückelt ist, wobei der elastische deformierbare Anteil oder der elastisch deformierbare Bereich oder das elastische deformierbare Stück bei der elastischen Deformation belastet wird, wenn die Vorrichtung auf einer ebenen horizontalen Oberfläche ruht und durch die elastische Rückbewegung eine Wirkung ausgeübt wird, die dazu führt, einen elektrischen Strom bereit zu stellen und/oder zu unterbrechen, wenn die Vorrichtung aufgehoben wird.

10. Vorrichtung nach dem voranstehenden Anspruch, wobei der elastisch deformierbare Anteil dauerhaft in Kontakt zu der Batterie (3) ist.

11. Vorrichtung nach einem der voranstehenden Ansprüche, wobei der zumindest eine der elektrischen Leiter (11; 46) dauerhaft in Kontakt zu der Batterie (3) ist und in Kontakt oder nicht zu einem anderen elektrischen Leiter (10; 47) kommt, je nachdem ob die Vorrichtung aufgehoben wird oder nicht.

12. Vorrichtung nach irgendeinem der Ansprüche 1 bis 10, wobei der zumindest eine der Leiter (26) dazu beiträgt, die Batterie (3) in ihrer Unterbringung (20) zurückzuhalten, und das Einbauen und das Entnehmen der Batterie (3) es erfordern, den elektrischen Leiter (26) von dem Träger abzulösen.

13. Vorrichtung nach irgendeinem der voranstehenden Ansprüche, wobei der Träger (2) einstückig ist oder der Träger weitere Stücke bzw. Abschnitte (2a, 2b) aufweist.

14. Vorrichtung nach Anspruch 1, wobei die Batterie auf dem Träger in Reaktion auf ein Anheben der Vorrichtung relativ beweglich ist.

15. Vorrichtung nach Anspruch 1, wobei der elektrische Leiter nicht auf den Träger geschweißt oder auf einer Schaltungsplatine ist, die aus einem Stück mit dem Träger gedruckt ist.
